# EUROPÄISCHE PATENTSCHRIFT

(11) **EP 3 346 155 B1**
(45) Veröffentlichungstag und Bekanntmachung des Hinweises auf die Patenterteilung: **13.02.2019**
(21) Anmeldenummer: 17206138.4
(22) Anmeldetag: 08.12.2017
(51) Int. Cl.: F16D 65/28

(54) **BREMSE MIT BREMSZYLINDER UND INTEGRIERTEM VERSCHLEISSNACHSTELLER**
BRAKE WITH BRAKE CYLINDER AND INTEGRATED WEAR ADJUSTER
FREIN POURVU DE CYLINDRE DE FREIN ET DE DISPOSITIF DE RATTRAPAGE D'USURE INTÉGRÉ

(30) Priorität: 27.12.2016 DE 102016226238
(43) Veröffentlichungstag der Anmeldung: 11.07.2018
(73) Patentinhaber: KES Keschwari Electronic Systems GmbH & Co. KG, 30890 Barsinghausen (DE)
(72) Erfinder: Keschwari Rasti, Mahmud, 30890 Barsinghausen (DE)
(74) Vertreter: Taruttis, Stefan Georg

(56) Entgegenhaltungen:
- EP-A1- 0 039 479
- EP-B1- 2 154 391
- WO-A1-01/21977
- WO-A1-2008/097188
- DE-C1- 19 509 540

## Beschreibung

Die Erfindung betrifft eine Bremse mit Bremszylinder und integriertem Verschleißnachsteller, insbesondere für Schienenfahrzeuge, bevorzugt eine Bremszange für eine Scheibenbremse bzw. eine Scheibenbremse mit einer Bremszange für Schienenfahrzeuge. Die Bremszange weist Zangenarme auf, an denen endständig Bremsbacken angebracht sind und die durch den Bremszylinder gegeneinander schwenkbar angetrieben sind. Die erfindungsgemäße Bremszange bzw. Scheibenbremse hat den Vorteil, dass der Bremszylinder und der Verschleißnachsteller in einem gemeinsamen Gehäuse enthalten sind und dass der Verschleißnachsteller entlang derselben linearen Bewegungsachse wirkt, wie die Kraft, die zwischen zwei Trägern erzeugt wird, die schwenkbar mit den Zangenarmen verbunden sind und diese zur Verschwenkung antreiben, um die Bremsbacken gegeneinander zu spannen.

### Stand der Technik

Die DE 195 09 540 C1 beschreibt eine Bremszange für eine Scheibenbremse, deren Zangenarme durch einen etwa mittig an einem der Zangenarme exzentrisch gelagerten Dreharm gegeneinander verschwenkt werden, der durch einen Bremszylinder gedreht wird. Gegenüber den endständig an den Zangenarmen angebrachten Bremsbacken ist zwischen den Enden der Zangenarme ein Verschleißnachsteller mit einer Spindel angeordnet, die dadurch ausgefahren wird, dass die Spindelmutter durch eine Steuerstange gedreht wird, die sich entlang eines Zangenarms erstreckt und über einen Hebelarm angetrieben ist, der am Dreharm angeordnet ist.

Die DE 43 30 440 A1 beschreibt eine Bremszange für eine Scheibenbremse, an deren Zangenarmen etwa mittig eine Anordnung aus einem Kraftspeicher angreift, der durch eine Verstellvorrichtung geschwenkt wird und über eine Steuerkurve auf einen Kipphebel wirkt, so dass die Zangenarme und die an einem Ende angebrachten Bremsbacken aufeinander zu geschwenkt werden. An dem Zangenende gegenüber den Bremsbacken ist ein Verschleißnachsteller angeordnet, der ein Getriebe und einen Stellmotor aufweist.

Der vorgenannte Stand der Technik hat den Nachteil, dass ein Verschleißnachsteller an einem Ende der Zangenarme gegenüber den Bremsbacken angeordnet ist, während die Krafterzeugungseinrichtung der Bremszange etwa mittig an den Zangenarmen angreift.

Die EP 2 154 391 B1 beschreibt eine Krafterzeugungseinrichtung einer Bremszange mit einem Bremszylinder, der auf einen Keil wirkt, der zwischen zwei Rollen geführt ist, um diese entlang einer linearen Bewegungsachse gegeneinander zu verschieben, die auf Träger wirken, die in der linearen Bewegungsachse liegen und endständig an Armen einer Bremszange angelenkt sind. Die eine Rolle wirkt auf eine Spindel, die in der linearen Bewegungsachse liegt und eine Spindelmutter aufweist, die abhängig von der Bewegung der Spindel gegen ein Gehäuse von einer bei dieser Bewegung komprimierten Feder gedreht wird und einen Verschleißnachsteller Ein weiteres Beispiel ist im Dokument WO 0 121 977 offenbart.

### Aufgabe der Erfindung

Der Erfindung stellt sich die Aufgabe, eine alternative Bremszange für eine Scheibenbremse bereitzustellen, insbesondere eine Bremszange mit einem alternativen Verschleißnachsteller, der in einem gemeinsamen Gehäuse mit einem Bremszylinder angeordnet ist und insbesondere eine Krafterzeugungseinrichtung mit einem Verschleißnachsteller in einem Gehäuse aufweist. Weiter bevorzugt soll die Bremszange eine direkte Messung der auf die Zangenarme wirkenden Kraft erlauben, die durch den auf den Bremszylinder wirkenden Druck erzeugt wird.

### Beschreibung der Erfindung

Die Erfindung löst die Aufgabe mit den Merkmalen der Ansprüche, insbesondere mit einer Bremse bzw. Bremszange, die an den Enden ihrer zwei Zangenarme jeweils Bremsbacken aufweist. An dem Ende der Zangenarme gegenüber den Bremsbacken ist zwischen den Zangenarmen eine Krafterzeugungseinrichtung angeordnet und zwischen den Enden der Zangenarme eine Verbindung, z.B. etwa mittig, um die die Zangenarme schwenkbar sind.

Die Krafterzeugungseinrichtung ist mit einem ersten Träger, der am ersten Ende eines Gehäuses angeordnet ist und einem zweiten Träger, der am gegenüberliegenden zweiten Ende des Gehäuses angeordnet ist, an den Zangenarmen angelenkt. Der erste und der zweite Träger sind bevorzugt auf einer gemeinsamen linearen Bewegungsachse angeordnet, entlang derer die Träger voneinander weg durch die Kraft eines Kolbens bewegt werden. Der erste Träger ist mit dem ersten Ende einer Spindel verbunden, bevorzugt drehfest. Der zweite Träger ist in einem Abstand zum ersten Träger am Gehäuse festgelegt, z.B. an einem dem ersten Ende des Gehäuses entlang der Spindelachse gegenüberliegenden zweiten Ende des Gehäuses. Der erste Träger ist zur Spindelachse schwenkbar an einem Zangenarm angelenkt. Bevorzugt sind beide Träger schwenkbar und drehfest an gegenüberliegenden Zangenarmen angelenkt. Der erste und zweite Träger sind bevorzugt in einer Ebene angeordnet, in der die Spindelachse liegt.

Die Spindel ist längsverschieblich und optional drehbar in dem Gehäuse geführt, optional in dem Gehäuse drehfest und längsverschieblich. Die Spindel ist zwischen den Zangenarmen drehfest angeordnet. Die Spindel ist von einer Spindelmutter umfasst, die drehbar und entlang der Spindelachse verschieblich in dem Gehäuse geführt ist. Entsprechend liegt die Spindelachse in der linearen Bewegungsachse der Spindel und der Spindelmutter. Generell ist die Spindelmutter nicht parallel zur linearen Bewegungsachse bzw. zur Spindelachse relativ zum Mitnehmer verschieblich. Die Spindelmutter ist drehbar in einem Mitnehmer gelagert. Der Mitnehmer ist durch einen Bremskolben parallel zur linearen Bewegungsachse verschieblich angetrieben, z.B. direkt durch eine Bremskolben, dessen Mittelachse parallel zur linearen Bewegungsachse liegt, oder durch einen von einem Bremskolben angetriebenen Keil, der zwischen den Mitnehmer und einen Gehäuseabschnitt beweglich ist, die jeweils gegen den Keil laufende Andruckrollen aufweisen.

Bevorzugt ist am Mitnehmer eine erste Andruckrolle gelagert, deren Drehachse bevorzugt senkrecht zur Spindelachse angeordnet ist. Die erste Andruckrolle kann von einem ersten Paar von Teildruckrollen gebildet werden, deren Achsen bevorzugt auf einer gemeinsamen Drehachse liegen, die senkrecht zur Spindelachse angeordnet ist, so dass die gemeinsame Drehachse der ersten Teildruckrollen in der Ebene der Spindelachse liegt. Der Mitnehmer ist durch einen Keil belastet, der zwischen der ersten Andruckrolle und einer zweiten Andruckrolle geführt ist, die an dem Gehäuse gelagert ist. Die zweite Andruckrolle kann von einem zweiten Paar von Teildruckrollen gebildet werden, dessen Drehachsen bevorzugt parallel zu den Drehachsen des ersten Rollenpaars liegen. Bevorzugt ist die erste Andruckrolle auf einer Drehachse angeordnet, bzw. sind die Rollen des ersten Paars von Teildruckrollen auf einer gemeinsamen Drehachse angeordnet, die koaxial zur Schwenkachse des zweiten Trägers angeordnet ist, entlang derer der zweite Träger an einem Zangenarm angelenkt ist. Bevorzugt sind jeweils die Rollen des ersten Paars von Teildruckrollen und jeweils die Rollen des zweiten Paars von Teildruckrollen beidseitig der Spindel angeordnet, insbesondere jeweils im gleichen Abstand zur Spindel. Der Keil ist durch einen Kolben verschieblich angetrieben, so dass eine Beaufschlagung des Kolbens, der in einem Bremszylinder geführt ist, mit Druckluft, den Keil zwischen die erste Andruckrolle und die zweite Andruckrolle bewegt und die erste Andruckrolle von der zweiten Andruckrolle beabstandet. Bevorzugt ist die Achse des Bremszylinders senkrecht zur Spindelachse angeordnet, weiter bevorzugt ist der Keil am Bremskolben festgelegt und senkrecht zur Spindelachse beweglich.

Die Belastung der ersten Andruckrolle durch den Keil mittels des Bremskolbens, z.B. bei einer Betriebsbremsung, führt zu einer Bewegung der ersten Andruckrolle und dadurch zu einer Bewegung des Mitnehmers und der daran drehbar gelagerten Spindelmutter mit der in dieser geführten Spindel in Richtung auf das erste Ende der Spindel bzw. in Richtung auf den ersten Träger bzw. vom zweiten Träger weg und vergrößert den Abstand zwischen erstem und zweitem Träger.

Generell ist der Bremszylinder, in dem der Bremskolben geführt ist, mit dem Druck der Bremse beaufschlagbar, z.B. mit Druck der Betriebsbremse. Für die Rückstellung des Bremskolbens, z.B. in dem Betriebszustand, in dem kein Bremsdruck im Bremszylinder anliegt, ist der Bremskolben bevorzugt durch zumindest eine Rückstellfeder belastet, die z.B. zwischen dem Bremskolben und einem Anschlag für diese Rückstellfeder angeordnet ist. Dieser Anschlag kann z.B. in dem Gehäuse zwischen dem Mitnehmer und dem Bremskolben angeordnet sein.

Der Mitnehmer ist drehfest und entlang der linearen Bewegungsachse verschieblich im Gehäuse geführt. Z.B. kann der Anschlag und/oder das Gehäuse eine Führung aufweisen, in die der Mitnehmer eingreift, um drehfest parallel zur linearen Bewegungsachse verschieblich zu sein.

Die Spindelmutter ist durch einen Antrieb drehangetrieben. Der Antrieb ist eingerichtet, die Spindelmutter gegen den Mitnehmer zu drehen. Bevorzugt ist der Antrieb am Mitnehmer angebracht. Die Spindelmutter ist drehbar in dem Mitnehmer gelagert und liegt bevorzugt zumindest an einem Ende, das bevorzugt ihr dem ersten Ende der Spindel zugewandtes erstes Ende ist, optional an ihren beiden Enden, gegen einen Anschlag des Mitnehmers an, so dass sie auch beim Drehen ortsfest relativ zum Mitnehmer ist. Die Spindelmutter ist daher eingerichtet, durch Drehen die Spindel entlang der linearen Bewegungsachse zu bewegen.

Der Mitnehmer kann an seinem dem ersten Ende der Spindel zugewandten ersten Ende und/oder an seinem gegenüberliegenden zweiten Ende einen Anschlag aufweisen, der bei Belastung des Mitnehmers relativ zur Spindelmutter in Richtung auf das erste Ende der Spindel gegen die Spindelmutter anliegt.

Die Spindelmutter kann an ihrem ersten Ende, das dem ersten Ende der Krafterzeugungseinrichtung zugewandt ist, und/oder an ihrem gegenüberliegenden zweiten Ende einen Anschlag für eine Stirnfläche des Mitnehmers aufweisen, die insbesondere bei Belastung der Spindelmutter in Richtung auf das zweite Ende der Krafterzeugungseinrichtung, z.B. durch die Spindelrückstellfeder, und bei einer Betriebsbremsung gegen den Anschlag der Spindelmutter anliegt.

Optional ist zwischen der Spindelmutter und dem Mitnehmer ein Freilauf angeordnet, der nur in der Drehrichtung der Spindelmutter freilaufend ist, in der sie die Spindel in Richtung auf deren erstes Ende bewegt, und in der entgegengesetzten Drehrichtung sperrend ist. Ein Freilauf zwischen Spindelmutter und Mitnehmer ist entriegelbar, bevorzugt gesteuert entriegelbar, so dass die Spindelmutter im entriegelten Zustand des Freilaufs in jede Richtung drehbar ist, insbesondere in die Richtung, in der sie die Spindel in Richtung auf das zweite Ende bewegt. Der Freilauf kann z.B. durch Freilaufscheiben gebildet sein, die z.B. zwischen einem Anschlag des Mitnehmers und dem diesem zugeordneten Anschlag der Spindelmutter angeordnet sind und/oder an den Stirnflächen der Spindelmutter und des Mitnehmers angreifen.

Die Spindel ist zwischen den Zangenarmen drehfest und längsverschieblich geführt. Die Spindel kann dadurch drehfest und längsverschieblich geführt sein, dass sie in einer Längsführung, die am Gehäuse festgelegt ist, geführt ist, und/oder dadurch, dass der erste Träger drehfest am ersten Ende der Spindel angebracht ist und der erste Träger drehfest an einem Zangenarm angelenkt ist. Bevorzugt ist die Spindel längsverschieblich im Gehäuse geführt und der erste und der zweite Träger sind drehfest an gegenüberliegenden Zangenarmen der Bremszange angelenkt. In dieser Ausführungsform kann die Spindel drehbar im Gehäuse geführt sein, so dass sie in ihrer Führung drehbar und längsverschieblich geführt ist. Das dem ersten Ende gegenüberliegende zweite Ende der Spindel kann längsverschieblich in einer am Gehäuse festgelegten Führungshülse geführt sein. Dabei ist das zweite Ende der Spindel bevorzugt längsverschieblich drehbar in einer Führungshülse geführt, insbesondere wenn der erste und der zweite Träger drehfest an gegenüberliegenden Armen einer Bremszange angelenkt sind. Diese Ausführungsform erlaubt das Verschieben der Spindel durch Drehen der Spindelmutter mit geringerem Kraftaufwand als bei einer im Gehäuse drehfest und längsverschieblich geführten Spindel. Alternativ kann das zweite Ende der Spindel längsverschieblich und drehfest in einer am Gehäuse festgelegten Führungshülse geführt sein.

Der Antrieb ist bevorzugt am Mitnehmer festgelegt, so dass bei Bewegung des Keils der Antrieb bevorzugt gemeinsam mit der Spindelmutter bewegt wird und an der Spindelmutter angreifen kann. Alternativ ist der Antrieb am Gehäuse festgelegt. Der Antrieb kann ein Motor sein, der z.B. ein Elektromotor, ein pneumatischer oder hydraulischer Motor ist, z.B. ein elektrischer, hydraulischer oder pneumatischer Drehantrieb oder Linearantrieb. Der Antrieb ist z.B. mittels eines Getriebes oder Riemens oder einer Kette mit der Spindelmutter gekoppelt.

Optional ist der Antrieb mit einem Freilauf mit der Spindelmutter verbunden. Der Freilauf ist bevorzugt eingerichtet, dass er in der Drehrichtung der Spindelmutter, die zur Bewegung der Spindel in Richtung auf das erste Ende zu führt, freilaufend ist und in der entgegengesetzten Drehrichtung sperrend ist. Ein Freilauf kann z.B. als Klinkenfreilauf, als Schlingfederfreilauf oder mit Klemmkörpern ausgeführt sein. Der Freilauf weist eine Entriegelungsvorrichtung auf, die die Sperre aufhebt und die insbesondere gesteuert ist.

Bevorzugt ist die Führung, die die Spindel längsverschieblich führt, eine Öffnung des Gehäuses, die am ersten Ende der Krafterzeugungseinrichtung liegt. Die Spindel kann z.B. angrenzend an ihr erstes Ende längsverschieblich, optional zusätzlich drehfest, am Gehäuse geführt sein. Generell bevorzugt kann der Gehäuseabschnitt, in dem die Führung für das erste Ende der Spindel angeordnet ist, lösbar mit dem Gehäuse verbunden sein.

Bevorzugt ist eine Spindelrückstellfeder, die die Spindelmutter in Richtung auf das zweite Ende der Krafterzeugungseinrichtung belastet, zwischen dem Gehäuseabschnitt am ersten Ende der Krafterzeugungseinrichtung und der Spindelmutter angeordnet. Die Spindelrückstellfeder kann z.B. eine um die Spindel angeordnete Spiraldruckfeder sein, die die Spindelmutter vom Gehäuse weg in Richtung auf das zweite Ende der Krafterzeugungseinrichtung belastet. Die Spindelrückstellfeder kann angrenzend an eine Führung, in der die Spindel angrenzend an ihr erstes Ende am Gehäuse geführt wird, gegen das Gehäuse anliegen. Diese Führung für die Spindel kann in einem abnehmbaren Gehäuseabschnitt enthalten sein. Zwischen der Spindelrückstellfeder und der Spindelmutter und/oder zwischen dem Gehäuseabschnitt, gegen den die Spindelrückstellfeder anliegt und der Spindelrückstellfeder, ist bevorzugt eine Freilaufscheibe angeordnet.

Bevorzugt weist das Gehäuse, insbesondere ein Gehäuseabschnitt, in dem eine Führung für die Spindel angeordnet ist, einen Anschlag für die Spindelmutter auf, auf den die Spindelmutter bei Verschiebung in Richtung auf das erste Ende der Krafterzeugungseinrichtung, insbesondere bei Beaufschlagen des Bremszylinders mit Druckluft, zu verschoben wird.

Die Krafterzeugungseinrichtung zeichnet sich bevorzugt dadurch aus, dass in dem Gehäuse ein Sensor angeordnet ist, der eingerichtet ist, den Weg und/oder die Stellung der Spindel entlang der linearen Bewegungsachse in jedem Zustand aufzunehmen.

Der Antrieb zur Drehung der Spindelmutter gegenüber dem Mitnehmer ist bevorzugt ein Elektromotor. Der Antrieb ist bevorzugt abhängig von einem Signal des Sensors für die Stellung und/oder den Weg der Spindel im Gehäuse gesteuert. Durch Drehung der Spindelmutter durch den Antrieb wird diese und damit die Spindel entlang der linearen Bewegungsachse gegenüber der Spindelmutter verschoben. Die Verschieblichkeit des Mitnehmers durch den Keil, der auf das erste Rollenpaar wirkt, und damit der Spindelmutter und mit ihr der Spindel entlang der linearen Bewegungsachse durch den Kolben wird durch die Drehung der Spindelmutter nicht geändert. So wirkt die Drehung der Spindelmutter zur Einstellung des Abstands zwischen erstem und zweitem Träger zur Verschleißnachstellung, wobei der Kolben den Mitnehmer und damit die Spindelmutter und die Spindel verschiebt, um eine Betriebsbremse zu bilden. Bevorzugt ist der Antrieb gesteuert, die Spindelmutter nur in einem Zustand zu drehen, in dem der Bremskolben, der die Betriebsbremse bildet, nicht durch Druck belastet ist. Der Antrieb ist bevorzugt abhängig von dem Signal des Sensors gesteuert und bildet mit der Spindelmutter einen Verschleißnachsteller an der Spindel, wobei der Antrieb nur dann zur Drehung der Spindelmutter angesteuert wird, wenn kein Bremsdruck im Bremszylinder anliegt bzw. gemessen wird. Dabei ist der Antrieb gesteuert, die Spindelmutter zu drehen, wenn ein vorgegebener maximaler Weg bei anliegendem Bremsdruck überschritten wurde. Bevorzugt ist der Antrieb dabei gesteuert, die Spindelmutter um einen Betrag zu drehen, der dem Weg entspricht, um den der vorgegebene maximale Weg bei anliegendem Bremsdruck überschritten wurde.

Da der Verschleißnachsteller innerhalb des Gehäuses angeordnet ist und in den Antrieb zwischen den Trägern integriert ist, hat die erfindungsgemäße Krafterzeugungseinrichtung den Vorteil, dass kein Gestängesteller außerhalb dieses Gehäuses, der z.B. in einem Abstand zur Krafterzeugungseinrichtung an den Zangenarmen angreift, vorhanden ist.

Der Antrieb ist vorzugsweise abhängig vom Signal des Sensors gesteuert, dass er die Spindelmutter nur bei Überschreitung eines vorgegebenen Wegs der Spindel oder der Spindelmutter oder des Mitnehmers im Gehäuse dreht, insbesondere zur Drehung der Spindelmutter um den Betrag eingerichtet ist, der eine Verschiebung der Spindel um den Betrag der Überschreitung des vorgegebenen Wegs bewirkt. Dabei ist der vorgegebene Weg z.B. der Weg, den die Spindel bei Beaufschlagung des Bremszylinders mit Druckluft zurücklegen soll. Zusätzlich oder alternativ ist der Antrieb vorzugsweise gesteuert, durch Drehen der Spindelmutter die Spindel in eine Stellung entlang der linearen Bewegungsachse zu bewegen, in der die Träger durch Druckbeaufschlagung des Kolbens nur um einen vorgegebenen maximalen Weg voneinander weg bewegt werden, z.B. bis die Träger die Zangenarme der Bremse soweit bewegt haben, bis die Bremsbacken einen Abstand voneinander einnehmen, in dem die Bremsbeläge einen vorbestimmten Abstand von der Bremsscheibe haben.

Der Antrieb ist bevorzugt an dem Mitnehmer festgelegt. Generell kann ein Wellenstumpf des Antriebs, z.B. mittels eines Getriebes oder Riemens oder einer Kette, koaxial oder senkrecht zur Achse der Spindel angeordnet und mit dieser drehfest verbunden sein. Für die Zwecke der Erfindung kann der Antrieb ein Getriebe aufweisen oder enthalten, das z.B. durch den Wellenstumpf des Antriebs angetrieben ist. Bevorzugt ist der Antrieb ein Schrittmotor. Bevorzugt ist der Antrieb gesteuert, die Spindelmutter nur dann zu drehen, wenn der Bremskolben nicht mit Druck beaufschlagt ist, z.B. im gelösten Zustand der Bremse.

Die Spindelmutter ist bevorzugt über den Mitnehmer, an dem der Antrieb angebracht sein kann, mit dem Antrieb verbunden, so dass bei Längsverschiebung der Spindel bei Bewegung des Mitnehmers und der Spindelmutter entlang der linearen Bewegungsachse, die durch den Kolben angetrieben wird, keine Relativbewegung zwischen dem Antrieb und der Spindelmutter auftritt.

Der Sensor ist bevorzugt mit einer Datenleitung mit einem elektronischen Mikrokontroller verbunden, der eingerichtet ist, den Elektromotor abhängig von einem Signal des Wegaufnehmers zu steuern.

In einer Variante ist der Sensor ein Wegaufnehmer, der eingerichtet ist, den Weg und/oder die Stellung der Spindelmutter entlang der linearen Bewegungsachse aufzunehmen, insbesondere den Weg der Spindelmutter, über den diese bei Beaufschlagung des Kolbens mit Druck bewegt wird und/oder die Stellung der Spindelmutter, die diese bei Beaufschlagung des Kolbens mit Druck einnimmt. Da die Spindelmutter am Mitnehmer gelagert ist, kann alternativ der Weg und/oder die Stellung des Mitnehmers vom Sensor aufgenommen werden. Da die Spindel mit der Spindelmutter in Eingriff steht, ist der Weg bzw. die Stellung der Spindelmutter durch Beaufschlagung des Kolbens mit Druck gleich dem Weg bzw. der Stellung der Spindel, wobei der Elektromotor steht bzw. die Spindel nicht gedreht wird. Der Wegaufnehmer ist bevorzugt ein berührungsfreier.

In einer anderen Variante oder zusätzlich zum Wegaufnehmer ist der Sensor ein Kraftsensor, der eingerichtet ist, die Kraft zwischen dem ersten Ende der Spindel und dem ersten Träger aufzunehmen. Bevorzugt ist der erste Träger drehfest und längsverschieblich, d.h. entlang der linearen Bewegungsachse, am ersten Ende der Spindel geführt bzw. angebracht. Dabei ist bevorzugt, dass ein Mikrokontroller, der den Antrieb steuert, eingerichtet ist, in Abwesenheit von Druck auf den Kolben den Antrieb zur Drehung der Spindelmutter zu steuern, bis der Kraftsensor eine von der Spindel auf den ersten Träger wirkende, steil ansteigende Kraft als Signal für einen Abstand der Bremsbacken aufnimmt, in dem daran angebrachte Bremsbeläge an einer Bremsscheibe anliegen, und der Mikrokontroller eingerichtet ist, den Antrieb anschließend zur Drehung der Spindelmutter in Gegenrichtung um einen vorbestimmten Betrag zu steuern. Dabei ist ein optionaler Freilauf zwischen Antrieb und Spindelmutter bei Drehung der Spindelmutter in Gegenrichtung gesteuert entriegelt. In dieser Variante ist die Bremse dadurch zur Verschleißnachstellung eingerichtet, dass in dem Zustand, in dem der Bremskolben mittels des Keils nicht den Mitnehmer bzw. die Spindelmutter belastet, der Antrieb die Spindel dreht, bis der Kraftsensor dadurch die Stellung der Bremsbeläge anliegend an einer Bremsscheibe anzeigt, dass die Kraft zwischen der Spindel und dem ersten Träger steil ansteigt. In dieser Stellung der Spindel bzw. der Spindelmutter liegen die Bremsbeläge an der Bremsscheibe an. Daher ist der Mikrokontroller eingerichtet, den Antrieb zur Drehung der Spindelmutter in Gegenrichtung zu steuern, so dass ohne Druckbeaufschlagung des Bremskolbens die Spindel in einer Stellung längs der linearen Bewegungsachse ist, in der sie keine Kraft zwischen den Trägern ausübt und die Bremsbeläge in einem Abstand von der Bremsscheibe liegen. Die Drehung der Spindelmutter in Gegenrichtung führt zur Bewegung der Spindel in Richtung auf das zweite Ende des Gehäuses. Die Drehung der Spindelmutter in Gegenrichtung erfolgt insbesondere um einen vorbestimmten Betrag, so dass die Spindel die Zangenarme und daher auch die Bremsbeläge in einen vorbestimmten Abstand zueinander bringt. So kann die Drehung der Spindelmutter in Gegenrichtung erfolgen bis z.B. die Bremsbeläge jeweils einen vorbestimmten Abstand zueinander einnehmen, in dem sie einen vorbestimmten Abstand von der Bremsscheibe einnehmen.

Ein Kraftsensor ist positioniert, um die Kraft aufzunehmen und zu bestimmen, die während der Beaufschlagung des Bremskolbens bzw. des Bremszylinders mit Bremsdruck zwischen Gehäuse und Spindel wirkt. Bevorzugt ist der Kraftsensor ein Kraftmeßbolzen, der zwischen dem Bremskolben und dem Mitnehmer angeordnet ist, z.B. zwischen dem Mitnehmer und einer Rolle, die durch den Bremskolben oder einen Keil am Bremskolben belastet ist, oder zwischen dem Gehäuse und einer Rolle, die durch den Bremskolben oder einen Keil am Bremskolben belastet ist.

Eine Steuerungseinrichtung kann eingerichtet sein, ein Signal für die Kraft, die von einem Kraftsensor aufgenommen wird, mit dem anliegenden Bremsdruck zu vergleichen und bevorzugt ein Signal zu erzeugen, wenn das Signal für die Kraft von einem vorgegebenen Verhältnis zum Bremsdruck abweicht, der z.B. von einem Drucksensor im Bremszylinder aufgenommen wird.

Der Zustand, in dem der Bremskolben die Spindelmutter nicht belastet, ist insbesondere ein Zustand, in dem der Bremszylinder, in dem der Bremskolben geführt ist, nicht mit Druck beaufschlagt ist und der Bremskolben auch nicht mittels eines Fortsatzes durch einen zweiten Kolben belastet wird, der z.B. in Abwesenheit von Betriebsdruck mittels einer zweiten Druckfeder gegen den Kolben belastet wird.

Optional, z.B. in Alternative zu einer Spindelrückstellfeder zwischen dem Gehäuse und der Spindelmutter, ist eine Druckfeder zwischen dem ersten Ende des Gehäuses und der Spindel angeordnet, die die Spindel vom ersten Ende weg und in Richtung auf das zweite Ende des Gehäuses belastet. Eine solche Druckfeder bildet eine Rückstellfeder für die Spindel, die entgegen der durch den Bremskolben aufgebrachten Verschiebung wirkt. Diese Druckfeder kann auch als Rückstellfeder für die Spindel und/oder als Rückstellfeder für die Betriebsbremse bezeichnet werden.

Optional weist das Gehäuse an seinem ersten Ende eine gemeinsame Führung für den ersten Träger und die Spindel auf. Optional weisen der erste Träger und die Spindel innerhalb einer gemeinsamen Führung denselben Außendurchmesser auf.

Weiter optional kann ein Drucksensor in dem Bremszylinder angeordnet sein, in dem der Bremskolben geführt ist, um den auf den Bremskolben wirkenden Druck aufzunehmen. Der Drucksensor und der Kraftsensor sind bevorzugt mit einem elektronischen Mikrokontroller verbunden, der eingerichtet ist, das Messsignal des Kraftsensors mit dem Messsignal des Drucksensors zu vergleichen, und ist weiter bevorzugt eingerichtet, Abweichungen des Verhältnisses zwischen dem Messsignal des Kraftsensors und dem Messsignal des Drucksensors von einem vorbestimmten Wert oder Wertebereich anzuzeigen. In dieser Ausführung ist die Bremse eingerichtet, eine Fehlfunktion anzuzeigen, z.B. eine zu geringe Kraft bei im Zylinder anliegendem Druck.

Weiter optional kann der Mikrokontroller eingerichtet sein, den Weg zu bestimmen, um den die Spindel durch Drehung der Spindelmutter mittels des Antriebs in Richtung auf das erste Ende bewegt wurde und bevorzugt das Erreichen eines vorbestimmten Wegs anzuzeigen, um den die Spindel in der Spindelmutter durch Drehung bewegt wurde. In dieser Ausführungsform ist die Bremse bevorzugt eingerichtet, das Erreichen eines vorbestimmten Verschleißes der Bremsbacken bzw. darauf angebrachter Bremsbeläge anzuzeigen. Dabei ist der Mikrokontroller bevorzugt eingerichtet, die jeweiligen Wege, um die die Spindel mittels des Antriebs in Richtung auf das erste Ende des Gehäuses bewegt wird, aufzuaddieren und optional anzuzeigen, zu übermitteln und/oder mit einem vorgegebenen Wert zu vergleichen, wobei der vorgegebene Wert einem zulässigen Verschleiß der Bremsbeläge entspricht.

Bevorzugt wird der Weg, um den die Spindel bei Beaufschlagung des Bremskolbens mit Bremsdruck in Richtung auf das erste Ende des Gehäuses bewegt wird, durch den Wegaufnehmer bestimmt. Dabei kann ein Mikrokontroller eingerichtet sein, jeweils den Weg aufzuaddieren, um den die Spindel in Richtung auf das erste Ende bewegt wird, und den aufaddierten Weg als Maß für den Verschleiß zu übermitteln.

Weiter optional kann der Mikrokontroller eingerichtet sein, bei Anbringen von neuen Bremsbelägen, die eine vorbestimmte Dicke aufweisen, den Weg zu bestimmen, um den die Spindelmutter bei anliegendem Bremsdruck die Spindel in Richtung auf das erste Ende des Gehäuses bewegt und diesen Weg zu übermitteln, wobei dieser Weg als Maß für den Verschleiß der Bremsscheibe angezeigt werden kann. Dazu kann der Weg der Spindel durch einen Sensor bestimmt werden, der in einer Variante ein Wegaufnehmer ist, der den Weg der Spindelmutter im Gehäuse aufnimmt. Der Mikrokontroller kann eingerichtet sein, die Bewegung bzw. den Weg der Spindel aufzunehmen, z.B. die Drehung der Spindelmutter oder die Drehungen, die der Antrieb auf die Spindelmutter überträgt, aufzunehmen und daraus den Weg zu berechnen, über den die Spindel entlang der linearen Bewegungsachse bewegt wird. Dabei kann der Kraftsensor durch eine steil ansteigende Kraft das Anliegen der Bremsbeläge an der Bremsscheibe anzeigen, bzw. der Mikrokontroller kann eingerichtet sein, dass durch eine steil ansteigende Kraft durch den Kraftsensor das Anliegen der Bremsbeläge an der Bremsscheibe anzeigt.

Bevorzugt ist der Mikrokontroller eingerichtet, z.B. mittels einer Elektronik, mit dem Bremssystem eines Schienenfahrzeugs verbunden zu werden, um Daten zu übermitteln. Dazu kann der Mikrokontroller z.B. eine Elektronik aufweisen, die ein Bussystem bildet, das kabellos oder kabelgebunden sein kann.

Die Krafterzeugungseinrichtung kann eine manuelle Betätigung oder Steuerung aufweisen, mit der der Antrieb zur Drehung der Spindelmutter, um die Spindel in eine Stellung nahe am zweiten Ende des Gehäuses zu verfahren, um in dieser Stellung die Bremszange zu öffnen und die Bremsbeläge auszutauschen. Zusätzlich kann die Krafterzeugungseinrichtung eine manuelle Steuerung aufweisen, mit der der Antrieb zur Drehung der Spindelmutter gesteuert wird, um die Spindel in eine Stellung zu verfahren, in der die Bremsbeläge einen vorbestimmten Abstand zueinander bzw. zu einer zwischen ihnen angeordneten Bremsscheibe aufweisen. In dieser Ausführungsform erlaubt die Krafterzeugungseinrichtung ein motorisches Verfahren der Bremszange in eine geöffnete Stellung und bevorzugt ein motorisches Verfahren der Bremszange in eine Stellung der Bremsbeläge in einen gewünschten Abstand zueinander bzw. zu einer Bremsscheibe.

In einer bevorzugten Ausführungsform kann der Kolben, der generell auch als Bremskolben bezeichnet wird und gesteuert mit Druck beaufschlagbar ist, um eine Betriebsbremse zu bilden, auf einen Keil wirken, der zwischen dem Mitnehmer und der Spindelmutter einerseits und dem zweiten Ende des Gehäuses andererseits wirkt, so dass der Mitnehmer und die Spindelmutter bzw. die Spindel vom zweiten Ende des Gehäuses auf das erste Ende des Gehäuses entlang der linearen Bewegungsachse verschoben wird.

In der ersten Ausführungsform ist bevorzugt eine Druckfeder am Kolben angeordnet, die dem auf den Kolben wirkenden Druck entgegen wirkt. Entsprechend kann diese Druckfeder als Rückstellfeder für die Betriebsbremse bezeichnet werden. Bevorzugt ist die Druckfeder in dieser Ausführungsform zwischen einem Federanschlag, der ortsfest am Gehäuse angebracht ist, und dem Kolben angeordnet, insbesondere senkrecht zur Spindelachse. Der Federanschlag für die Druckfeder kann angrenzend an die Spindelmutter angeordnet sein und z.B. einen Teil der Führung für die Spindelmutter in dem Gehäuse bilden. Optional ist die Führung für die Spindelmutter zwischen einer Wand des Gehäuses und dem Federanschlag angeordnet oder wird durch eine Wand des Gehäuses und den Federanschlag gebildet.

In einer zweiten Ausführungsform ist der Kolben am Mitnehmer der Spindelmutter angeordnet und kann mit dem Mitnehmer fest verbunden sein oder einstückig mit diesem ausgebildet sein. Der Wegaufnehmer kann daher eingerichtet sein, den Weg des Bremskolbens gegenüber dem Gehäuse zu messen. Der Bremskolben ist in einem Zylinder geführt, der parallel zur linearen Bewegungsachse angeordnet ist, z.B. koaxial zur Spindelachse bzw. zur linearen Bewegungsachse. Der Zylinder ist in einem ersten Abschnitt des Gehäuses angeordnet und eingerichtet, den Bremskolben bei Druckbeaufschlagung in Richtung auf das erste Ende des Gehäuses zu belasten. Der Zylinder kann einstückig in dem Gehäuse ausgebildet sein. In dieser Ausführungsform wirkt eine optionale Druckfeder, die zwischen dem ersten Ende des Gehäuses und dem Kolben angeordnet ist, sowohl als Rückstellfeder für den Mitnehmer und die Spindelmutter als auch als Rückstellfeder für den Kolben. Dieser Kolben wirkt als Betriebsbremse, da er bei Beaufschlagung mit Druck den Mitnehmer und die Spindelmutter und damit die Spindel in Richtung auf das erste Ende des Gehäuses belastet.

In den Ausführungsformen der Erfindung ist bevorzugt in dem Gehäuse ein zweiter Kolben in einem zweiten Zylinder koaxial zum Bremskolben angeordnet. Generell weist der zweite Kolben einen Fortsatz auf, der in einer Stellung, die der zweite Kolben ohne Druckbeaufschlagung einnimmt, gegen den ersten Kolben, der auch als Bremskolben bezeichnet wird, anliegt. Der zweite Zylinder ist eingerichtet, den zweiten Kolben mit Druck zu beaufschlagen, der den zweiten Kolben in Richtung auf das zweite Ende des Gehäuses belastet, so dass bei Beaufschlagung mit Druck der zweite Kolben vom ersten Kolben weg bewegt wird und keine Kraft auf den ersten Kolben bzw. Bremskolben ausübt. Eine Druckfeder ist zwischen dem zweiten Kolben und dem zweiten Ende des Gehäuses angeordnet, die den zweiten Kolben in Richtung auf den ersten Kolben belastet, so dass der Fortsatz des zweiten Kolbens gegen den ersten Kolben belastet wird. Daher wirkt der zweite Kolben als Feststellbremse, die ohne anliegenden Druck durch die Druckfeder, die den zweiten Kolben in Richtung auf den ersten Kolben belastet, die Spindelmutter gegen das erste Ende des Gehäuses belastet. Generell ist der zweite Kolben auf seiner dem Bremskolben zugewandten Kolbenfläche mit Druck beaufschlagbar und durch eine zweite Druckfeder in Richtung auf den Bremskolben belastet, wobei der zweite Kolben einen Fortsatz aufweist, der in dem Zustand ohne Druckbeaufschlagung durch die zweite Druckfeder den Bremskolben belastet. In der ersten Ausführungsform ist die Anordnung aus Bremskolben und zweitem Kolben an dem Keil angeordnet, um diesen in Richtung auf den Zwischenraum zwischen den Andruckrollen zu belasten. In der zweiten Ausführungsform sind der Bremskolben und der zweite Kolben bevorzugt koaxial zur linearen Bewegungsachse bzw. koaxial zur Spindelachse angeordnet, wobei der Bremskolben an der Spindelmutter festgelegt ist.

Generell können der Bremskolben und der zweite Kolben entlang einer gemeinsamen Bewegungsachse angeordnet sein. In der zweiten Ausführungsform ist der zweite Kolben bevorzugt verschieblich auf der Spindel angeordnet und weiter bevorzugt sind beide Kolben bzw. Zylinder koaxial zur linearen Bewegungsachse bzw. zur Spindelachse angeordnet.

Bevorzugt ist der Fortsatz des zweiten Kolbens rohrförmig und koaxial zur Spindelachse angeordnet. Optional erstrecken sich die kopfseitigen Wände beider Zylinder etwa radial zur Spindelachse bzw. radial zur linearen Bewegungsachse.
Die Erfindung wird nun genauer mit Bezug auf die Figuren beschrieben, die schematisch in
- Figur 1 eine Schnittansicht einer Ausführungsform der erfindungsgemäßen Krafterzeugungseinrichtung in einer Stellung des Kolbens mit Druckbeaufschlagung,
- Figur 2 eine um 90° gedrehte Schnittansicht von Figur 1,
- Figur 3 eine Schnittansicht der Ausführungsform von Figur 1 in einer Stellung des Kolbens ohne Druckbeaufschlagung und in
- Figur 4 um 90° gedrehte Schnittansicht von Figur 3 zeigen.

In den Figuren bezeichnen gleiche Bezugsziffern funktionsgleiche Elemente. Die Arme der Bremszange sind nicht gezeigt. Der erste Träger 1 und der zweite Träger 2, die auf einer gemeinsamen linearen Bewegungsachse 3 am Gehäuse 4 angeordnet sind, sind zur Anlenkung an jeweils einem Zangenarm einer Bremse vorgesehen.

Der zweite Träger 2 ist an dem zweiten Ende 6 des Gehäuses 4 angeordnet, das dessen erstem Ende 5 gegenüberliegt. Die von der Krafterzeugungseinrichtung erzeugte Kraft, die den ersten Träger 1 in eine Richtung vom zweiten Träger 2 weg belastet, kann daher zur Spreizung zweier Zangenarme an deren Enden angelenkt sein, an deren gegenüberliegenden Enden Bremsbacken angebracht sind und die zwischen ihren Enden aneinander angelenkt sind.

Der erste Träger 1 ist am ersten Ende 5 des Gehäuses 4 angeordnet und am ersten Ende 7 der Spindel 8 angebracht. Die Spindel 8 ist längsverschieblich in einer Führung 9 geführt ist, die entlang der linearen Bewegungsachse 3 am ersten Ende 5 des Gehäuses 4 angeordnet ist. Optional kann die Spindel 8 drehfest in der Führung 9 geführt sein, z.B. durch eine Längsnut in der Führung 9, in die ein am ersten Ende 7 der Spindel festgelegter Stift verschieblich eingreift.

Bevorzugt ist die Spindel 8 längsverschieblich und drehbar in der Führung 9 am Gehäuse 4 geführt und drehfest mit dem ersten Träger 1 verbunden, der drehfest an einem Zangenarm angelenkt ist. Auf diese Weise ist die Spindel 8 in der Bremse drehfest angeordnet. Dabei kann die Spindel 8 im Gehäuse 4 längsverschieblich und drehbar geführt sein.

Alternativ oder zusätzlich kann die Spindel 8 an ihrem dem ersten Ende 7 gegenüberliegenden zweiten Ende 10 längsverschieblich, und optional drehbar oder drehfest, am Gehäuse geführt sein, z.B. in einer koaxialen Führungshülse 11, die im Gehäuse 4 angeordnet ist.

Die Spindel 8 ist von der Spindelmutter 12 umfasst, die drehbar in einem Mitnehmer 13 gelagert. Der Mitnehmer 13 und die Spindelmutter 12 weisen Anschläge auf, die zumindest bei Belastung der Spindelmutter entlang der linearen Bewegungsachse 3 in Richtung auf das zweite Ende 10 der Spindel 8 gegen den Mitnehmer aneinander anliegen und eine Bewegung der Spindelmutter 8 entlang der linearen Bewegungsachse 3 relativ zum Mitnehmer 13 verhindern. Bevorzugt sind Scheiben 14 zwischen der Spindelrückstellfeder 26 und der Spindelmutter 12 angeordnet.

Der Mitnehmer 13 ist bevorzugt drehfest und längsverschieblich im Gehäuse 4 geführt. Der Antrieb 15, hier beispielhaft als Elektromotor dargestellt, ist an dem Mitnehmer 13 angebracht und mittels eines Getriebes 16, das ein Ritzel und einen Zahnkranz an der Spindelmutter 12 umfasst, mit der Spindelmutter 12 verbunden.

Am ersten Ende 5 des Gehäuses 4 ist ein Anschlag 17 angeordnet, gegen den die Spindelmutter 12 bei Bewegung in Richtung auf das erste Ende 5 anliegt.

Bevorzugt ist die Führung 9, z.B. ein Gleitlager, rotationssymmetrisch zur linearen Bewegungsachse 3, z.B. eine Bohrung am ersten Ende 5 des Gehäuses 4, und das erste Ende 7 der Spindel 8 ist drehbar und längsverschieblich in der Führung 9 geführt.

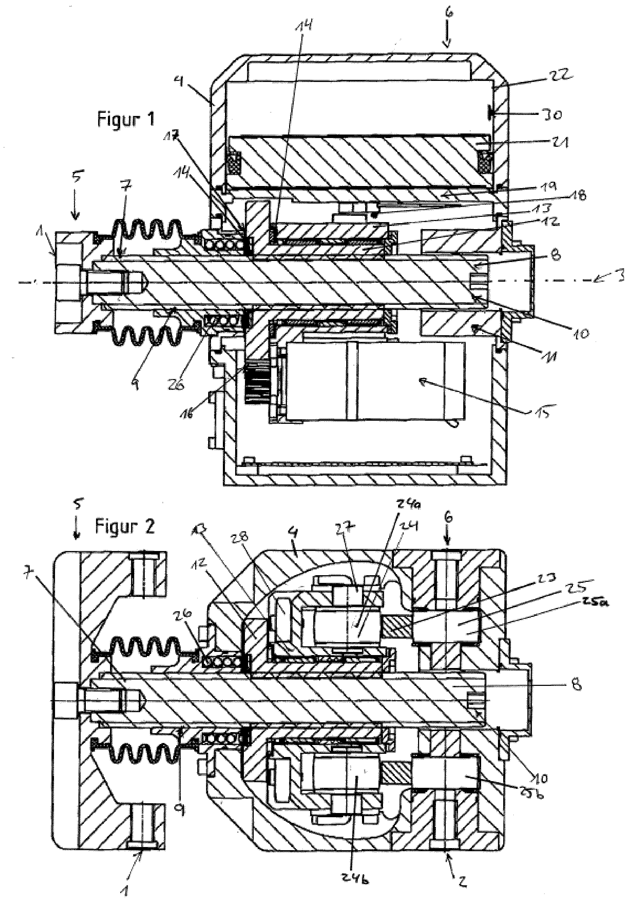

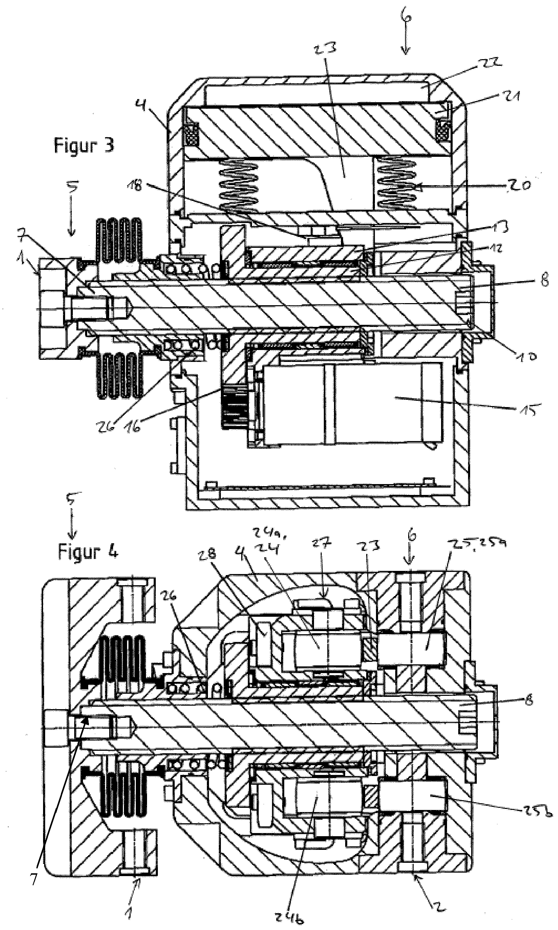

In Figur 1 ist gezeigt, dass in dem Gehäuse 4 als Sensor 18 ein Wegaufnehmer angeordnet ist, der eingerichtet ist, den Weg des Mitnehmers 13 und damit der Spindelmutter 12 entlang der linearen Bewegungsachse 3 zu messen. Der Sensor 21 ist mit einem Mikrokontroller 27, der z.B. ein elektronischer Rechner ist, zur Übertragung eines Signals für die Bewegung bzw. Stellung der Spindelmutter 12 im Gehäuse 4 verbunden. Der Sensor 18 kann, wie in Figuren 1 und 3 gezeigt ist, zwischen einer Begrenzung 19 für eine Rückstellfeder 20 für den Bremskolben 21 angeordnet sein.

Der Mikrokontroller 27 ist zur Übertragung eines Steuersignals mit dem Antrieb 15 verbunden, wobei der Mikrokontroller 27 eingerichtet ist, das Steuersignal abhängig von dem Signal des Sensors 18 zu erzeugen. Insbesondere ist der Mikrokontroller eingerichtet, vom Sensor 18 übermittelte Signale für die Bewegung bzw. Stellung der Spindelmutter 12 im Gehäuse 4 mit einem vorgegebenen Wert für die Bewegung bzw. Stellung der Spindelmutter 12 zu vergleichen und den Antrieb 15 abhängig von diesem Vergleich zu steuern. Dabei kann der Mikrokontroller 27 eingerichtet sein, den Antrieb 15 so zu steuern, dass dieser die Spindelmutter 12 dreht, bis die Spindel 8 gegenüber der Spindelmutter 12 um den Betrag bewegt ist, der sich aus diesem Vergleich ergibt.

Die Figuren 1 bis 4 zeigen den Antrieb des Mitnehmers 13 bzw. der damit verbundenen Spindelmutter 12 und der Spindel 8 durch den Bremskolben 21 der erfindungsgemäßen Krafterzeugungseinrichtung. Dabei zeigen die Figuren 1 und 2 den Kolben 21, der auch als Bremskolben 21 bezeichnet wird, in der mit Bremsdruck im Bremszylinder 22 beaufschlagten Stellung. Der Bremskolben 21 ist mit einem Keil 23 verbunden, der zwischen einer ersten Andruckrolle 24, die bevorzugt wie dargestellt von zwei seitlich der Spindelmutter 12 an dem Mitnehmer 13 angeordneten Teildruckrollen 24a, 24b gebildet wird, einerseits und andererseits einer ortsfest am Gehäuse angeordneten zweiten Andruckrolle 25 geführt ist. Die zweite Andruckrolle 25 wird bevorzugt wie dargestellt von einem zweiten Paar von Teildruckrollen 25a, 25b gebildet. Die Drehachsen der ersten Andruckrolle 24 und der zweiten Andruckrolle 25, bzw. ihrer ersten Teilrollen 24a, 24b bzw. zweiten Teilrollen 25a, 25b, sind senkrecht zur linearen Bewegungsachse 3 bzw. zur Spindelachse angeordnet. Die erste Andruckrolle 24 ist am Mitnehmer 13 gelagert, so dass die Bewegung des Keils 23 zwischen der ersten Andruckrolle 24 und der zweiten, ortsfesten Andruckrolle 25 eine Verschiebung des Mitnehmers 13 und damit der Spindelmutter 12 und der Spindel 8 bewirkt, die mit der Spindelmutter 12 in Eingriff steht.

Der Mitnehmer 13 ist längsverschieblich und drehfest im Gehäuse geführt, bevorzugt auf zwei Gleitschienen drehfest im Gehäuse geführt.

Zwischen der Spindelmutter 12 und dem ersten Ende 5 des Gehäuses 4 ist eine Druckfeder als Spindelrückstellfeder 26 angeordnet, die die Spindelmutter 12 in Richtung auf das zweite Ende 6 des Gehäuses 4 belastet.

Bevorzugt weist die Krafterzeugungseinrichtung zur Messung der Kraft, die auf den ersten Träger 1 wirkt, einen Kraftsensor 27 auf, der zwischen einer der Andruckrollen 24, 25 und ihrem Lagerort, z.B. zwischen der zweiten Andruckrolle und dem Gehäuse 4, bevorzugt zwischen der ersten Andruckrolle 24 und dem Mitnehmer 13 angeordnet ist, wie z.B. in Figuren 2 und 4 anhand des Kraftmeßbolzens gezeigt ist, auf dem die am Mitnehmer gelagerte erste Andruckrolle 24 angeordnet ist. Die Signalleitung des Kraftsensors 27 ist z.B. mit einem Mikrokontroller 28 verbunden, der zur Steuerung des Antriebs abhängig von einem Signal des Kraftsensors 27 und/oder abhängig von einem Signal des Sensors 18 für den Weg und/oder die Stellung der Spindelmutter 12 eingerichtet ist.

Die Figuren 3 und 4 zeigen den Kolben 21 in der nicht druckbeaufschlagten Stellung, in der der Keil 23 einen geringen Abstand zwischen der ersten Andruckrolle 24 und der zweiten Andruckrolle 25 einstellt. Der Keil 23 ist in der hier gezeigten Ausführung senkrecht gegen die lineare Bewegungsachse 3 bzw. gegen die Spindelachse geführt, entsprechend ist die Mittelachse des Kolbens 21 und des ihn führenden Zylinders 22 senkrecht zur linearen Bewegungsachse 3 bzw. zur Spindelachse angeordnet. Die Druckfeder 29, die zwischen dem am Gehäuse 4 festgelegten Federanschlag 19 und dem Kolben 21 angeordnet ist, belastet den Kolben 21 in seine nicht durch Druck im Zylinder 22 beaufschlagte Stellung, so dass die Druckfeder 29 auch als Rückstellfeder für den Bremskolben 21 bezeichnet werden kann.
Die Figuren 1 und 2 zeigen den Kolben 21 in der mit Druck im Zylinder 22 beaufschlagten Stellung, in der der Keil 23 die erste Andruckrolle 24 in Richtung auf das erste Ende 5 des Gehäuses 4 bewegt, wobei die Spindelrückstellfeder 26 zwischen Spindelmutter 12 und dem ersten Ende 5 des Gehäuses 4 komprimiert wird. Die Spindelmutter 12 bewegt die Spindel 8 in Richtung auf das erste Ende 5 des Gehäuses 4, so dass der erste Träger 1 vom zweiten Träger 2 weg bewegt wird.

Die Krafterzeugungseinrichtung enthält daher einen Verschleißnachsteller, der eine Spindel 12, deren erstes Ende 7 am ersten Träger 1 gelagert ist und die längs der linearen Bewegungsachse 3 verschieblich ist und eine Spindelmutter 12, die drehbar in einem Mitnehmer 13 gelagert ist, der drehfest und längsverschieblich im Gehäuse 4 geführt ist, den Wegaufnehmer als Sensor 18, der den Weg der Spindelmutter 12 gegenüber dem Gehäuse 4 bei Beaufschlagung mit Bremsdruck bestimmt, und den abhängig von einem Signal des Sensors 18 gesteuerten Antrieb 15, der am Mitnehmer 13 festgelegt ist und der die Spindelmutter 12 zur Drehung antreibt, aufweist oder daraus besteht. Zur Justierung, z.B. Nach einem Wechsel der Bremsbeläge, kann in Kombination mit dem als Wegaufnehmer gebildeten Sensor 18 ein zusätzlicher Sensor 18, der durch einen Kraftsensor gebildet ist, der eingerichtet ist, die zwischen der Spindel 8 und dem ersten Träger wirkende Kraft aufzunehmen, und der Antrieb 15 kann durch einen Mikrokontroller gesteuert sein, die Spindelmutter 8 zu drehen, bis der Kraftsensor eine steil ansteigende Kraft als Signal aufnimmt.

Bei Drehung der Spindelmutter 12 wird die Spindel 8 relativ zur Spindelmutter 12 entlang der linearen Bewegungsachse 3 verschoben, wobei die Stellung und Bewegung der Spindelmutter 12 entlang der linearen Bewegungsachse 3 von der Stellung des Keils 23 abhängt.

In einem in Figuren 3 und 4 gezeigten Zustand der Bremse, in dem der Kolben 21 nicht mit Druck beaufschlagt wird, der gegen den Mitnehmer 13 und die Spindelmutter 12 wirkt, ist der Mikrokontroller 27 eingerichtet, z.B. für die Justierung, den Antrieb 15 zur Drehung der Spindelmutter 12 zu steuern, bis der Kraftsensor 27 eine auf die Spindelmutter 12 in Richtung der linearen Bewegungsachse 3 wirkende Kraft aufnimmt, die auf den ersten Träger bzw. zwischen erstem 1 und zweitem Träger 2 wirkt. Dieser Zustand der Bremse ist z.B. einer der Abwesenheit von Druck auf den Kolben 21 im Zylinder 22. Die Kraft ist bevorzugt eine, die während der Drehung der Spindelmutter 12 steil ansteigt und so das Anliegen von Bremsbelägen, die auf den Bremsbacken angebracht sind, an einer Bremsscheibe anzeigen und z.B. nicht durch Reibungskräfte innerhalb der Bremse verursacht werden. Dabei ist der Mikrokontroller 27 eingerichtet, bei dem Signal des Kraftsensors 27 für eine steil ansteigende Kraft den Antrieb 15 zu stoppen und anschließend zur Drehung der Spindelmutter 12 in Gegenrichtung um einen vorbestimmten Betrag zu steuern, um die Bremsbeläge von der Bremsscheibe zu beabstanden. Der vorbestimmte Betrag für den Abstand ist derjenige, um den die Bremsbacken bzw. Bremsbeläge durch die Wirkung des Bremskolbens 21 aufeinander zu und gegen die Bremsscheibe bewegt werden.

Optional ist ein Schalter, z.B. ein Drucktaster, am Gehäuse 4 angebracht, der zur manuellen Steuerung des Antriebs 15 eingerichtet ist, um durch diesen die Spindel 8 zu verfahren.

Optional ist ein Drucksensor 30 in dem Zylinder 28 angeordnet, in dem der Bremskolben 23 geführt ist bzw. mit Druck beaufschlagt wird, um die Spindelmutter 12 in Richtung auf das erste Ende 5 des Gehäuses 4 anzutreiben.

Generell kann der zweite Träger 2 fest mit dem zweiten Ende 6 des Gehäuses 4 verbunden sein.

**Bezugszeichenliste:**

| | |
|---|---|
| 1 erster Träger | 16 Getriebe |
| 2 zweiter Träger | 17 Anschlag |
| 3 lineare Bewegungsachse | 18 Sensor |
| 4 Gehäuse | 19 Begrenzung für eine Rückstellfeder |
| 5 erstes Ende des Gehäuses | 20 Rückstellfeder für den Bremskolben |
| 6 zweites Ende des Gehäuses | 21 Bremskolben |
| 7 erstes Ende der Spindel | 22 Bremszylinder |
| 8 Spindel | 23 Keil |
| 9 Spindelführung | 24, 24a, 24b erste Druckrolle |
| 10 zweites Ende der Spindel | 25, 25a, 25b zweite Druckrolle |
| 11 Führungshülse | 26 Spindelrückstellfeder |
| 12 Spindelmutter | 27 Kraftsensor |
| 13 Mitnehmer | 28 Mikrokontroller |
| 14 Scheibe, Freilaufscheibe | 29 Rückstellfeder für Bremskolben |
| 15 Antrieb | 30 Drucksensor |

## Patentansprüche

1. Bremse mit zwei Zangenarmen, an deren Enden jeweils Bremsbacken angeordnet sind und zwischen denen eine Krafterzeugungseinrichtung mittels eines ersten Trägers (1) und eines zweiten Trägers (2) angelenkt ist, wobei eine parallel zur linearen Bewegungsachse (3) in einem Gehäuse (4) verschiebliche Spindel (8), die zwischen den Trägern (1, 2) drehfest angeordnet ist, wobei der erste Träger (1) an einem ersten Ende (7) der Spindel (8) angeordnet ist und der zweite Träger (2) an dem Gehäuse (4) angeordnet ist, mit einer an der Spindel (8) angreifenden Spindelmutter (12), die drehbar in einem Mitnehmer (13) angeordnet ist und von einem am Mitnehmer (13) festgelegten Antrieb (15) drehangetrieben ist, **dadurch gekennzeichnet, dass** der Mitnehmer (13) drehfest und parallel zur linearen Bewegungsachse (3) in dem Gehäuse (4) verschieblich ist und der Mitnehmer (13) durch einen Bremskolben (21) parallel zur linearen Bewegungsachse (3) angetrieben verschieblich ist.

2. Bremse nach Anspruch 1, **dadurch gekennzeichnet, dass** der erste Träger (1) und der zweite Träger (2) an gegenüberliegenden Zangenarmen drehfest angelenkt sind und die Spindel (8) drehfest am ersten Träger (1) angelenkt ist und längsverschieblich und drehbar an dem Gehäuse (4) geführt ist.

3. Bremse nach einem der voranstehenden Ansprüche, **dadurch gekennzeichnet, dass** die Spindel (8) an ihrem ersten Ende (7) in einer Führung (9) am ersten Ende (5) des Gehäuses (4) geführt ist und an ihrem dem ersten Ende (7) gegenüberliegenden zweiten Ende (10) in einer am zweiten Ende (6) des Gehäuses (4), das dessen erstem Ende (5) gegenüberliegt, festgelegten Führungshülse (11) drehbar und längsverschieblich geführt ist.

4. Bremse nach einem der Ansprüche 1 bis 2, **dadurch gekennzeichnet, dass** die Spindel (8) an ihrem ersten Ende (7) in einer Führung (9) am ersten Ende (5) des Gehäuses (4) geführt ist und/oder an ihrem dem ersten Ende (7) gegenüberliegenden zweiten Ende (10) nicht geführt ist.

5. Bremse nach einem der voranstehenden Ansprüche, **dadurch gekennzeichnet, dass** der Bremskolben (21) auf einen Keil (23) wirkt, der zwischen einer ersten Andruckrolle (24), die am Mitnehmer (13) gelagert ist, und einer zweiten Andruckrolle (25), die am Gehäuse angeordnet ist, wirkt.

6. Bremse nach einem der voranstehenden Ansprüche, **dadurch gekennzeichnet, dass** zwischen der Spindelmutter (12) und dem Mitnehmer (13) und/oder zwischen der Spindelmutter (12) und dem Antrieb (15) ein Freilauf angeordnet ist, der in der Drehrichtung der Spindelmutter (12) freilaufend ist, in der die Drehung die Spindel (8) in Richtung auf ihr erstes Ende (7) zu bewegt und in der entgegengesetzten Drehrichtung sperrend ist.

7. Bremse nach einem der voranstehenden Ansprüche, **dadurch gekennzeichnet, dass** die Spindelmutter (12) durch eine Spindelrückstellfeder (26), die sich gegen das erste Ende (5) des Gehäuses (4) stützt, vom ersten Ende (5) des Gehäuses weg belastet ist.

8. Bremse nach einem der voranstehenden Ansprüche, **dadurch gekennzeichnet, dass** in dem Gehäuse (4) ein Sensor (18) angebracht ist, der eingerichtet ist, den Weg und/oder die Stellung der Spindel (8), der Spindelmutter (12) und/oder des Mitnehmers (13) aufzunehmen.

9. Bremse nach einem der voranstehenden Ansprüche, **gekennzeichnet durch** einen Kraftsensor (27), der eingerichtet ist, die auf den ersten Träger (1) wirkende Kraft aufzunehmen.

10. Bremse nach Anspruch 9, **dadurch gekennzeichnet, dass** der Kraftsensor (27) an einer Druckrolle (23, 24) angeordnet ist, die von einem von dem Bremskolben (21) angetriebenen Keil belastet ist.

11. Bremse nach einem der voranstehenden Ansprüche, **dadurch gekennzeichnet, dass** sie einen Drucksensor (30) für den im Bremszylinder anliegenden Druck aufweist und der Antrieb (15) so gesteuert ist, dass er die Spindelmutter (12) nur dreht, wenn der Drucksensor (30) keinen anliegenden Bremsdruck aufnimmt.

12. Bremse nach einem der voranstehenden Ansprüche, **dadurch gekennzeichnet, dass** sie einen Mikrokontroller (28) aufweist, der eingerichtet ist, die jeweiligen Wege, um die die Spindelmutter (12) die Spindel (8) bewegt, aufzuaddieren und als Maß für den Verschleiß von Bremsbelägen der Bremse zu übermitteln.

13. Bremse nach einem der voranstehenden Ansprüche, **dadurch gekennzeichnet, dass** sie einen Mikrokontroller (28) aufweist, der eingerichtet ist, den Weg, um den die Spindelmutter (12) durch Drehen die Spindel (8) bei Anordnung von Bremsbelägen bekannter Dicke an den Bremsbacken bewegt, bis die Bremsbeläge an einer zwischen den Bremsbelägen angeordneten Bremsscheibe anliegen, als Maß für den Verschleiß der Bremsscheibe zu übermitteln.

## Claims

1. Brake having two caliper arms, at the ends of which brake shoes are arranged and between which a force generating device is articulated by means of a first carrier (1) and a second carrier (2), having a spindle (8) moveable in parallel to the linear axis of movement (3), which spindle is arranged torque-proof between the carriers (1, 2), wherein the first carrier (1) is arranged at a first end (7) of the spindle (8) and the second carrier (2) is arranged at the housing (4), having a spindle nut (12) attached to the spindle (8), the spindle nut being arranged rotatable in a driving feature (13) and is rotatably driven by a drive (15) fixed to the driving feature (13), **characterized in that** the driving feature (13) is torque-proof and slidable in parallel to the linear axis of movement (3) in the housing (4) and that the driving feature (13) is slidably driven by a brake piston (21) in parallel to the linear axis of movement (3).

2. Brake according to claim 1, **characterized in that** the first carrier (1) and the second carrier (2) are torque-proof articulated on opposite caliper arms and the spindle (8) is articulated torque-proof to the first carrier (1) and is guided longitudinally slidable and rotatable on the housing (4).

3. Brake according to one of the preceding claims, **characterized in that** the spindle (8) is guided on its first end (7) in a guidance (9) on the first end (5) of the housing (4) and opposite its first end (7) at its second end (10) is guided rotatably and longitudinally slidable in a guidance sleeve (11) fixed at the second end (6) of the housing (4) which is opposite of its first end (5).

4. Brake according to one of claims 1 to 2, characterized that the spindle (8) at its first end (7) is guided in a guidance (9) at the first end (5) of the housing (4) and/or is not guided at its second end (10) opposite its first end (7).

5. Brake according to one of the preceding claims, **characterized in that** the brake piston (21) acts onto a wedge (23) which acts between a first pressure roll (24) run on bearings on the driving feature (13), and a second pressure roll (25) arranged on the housing.

6. Brake according to one of the preceding claims, **characterized in that** between the spindle nut (12) and the driving feature (13) and/or between the spindle nut (12) and the drive (15) there is arranged a free wheel, which is free wheeling in the direction of rotation of the spindle nut (12) in which the rotation moves the spindle (8) into the direction towards its first end (7), and is stopping in the opposite direction of rotation.

7. Brake according to one of the preceding claims, **characterized in that** the spindle nut (12) is loaded away from the first end (5) of the housing by a spindle return spring (26) which is supported by the first end (5) of the housing (4).

8. Brake according to one of the preceding claims, **characterized in that** in the housing (4) a sensor (18) is arranged which is set up to pick up the way and/or the position of the spindle (8), of the spindle nut (12) and/or of the driving feature (13).

9. Brake according to one of the preceding claims, **characterized by** a force sensor (27) which is set up to pick up the force acting on the first carrier (1).

10. Brake according to claim 9, **characterized in that** the force sensor (27) is arranged on a pressure roll (23, 24) which is loaded by a wedge that is driven by the brake piston (21).

11. Brake according to one of the preceding claims, **characterized in that** it has a pressure sensor (30) for the pressure present in the brake cylinder and the drive (15) is controlled such that it turns the spindle nut (12) only when the pressure sensor (30) does not register a brake pressure applied.

12. Brake according to one of the preceding claims, **characterized in that** it has a microcontroller (28) which is set up to add up and to transmit the respective ways by which the spindle nut (12) moves the spindle (8) as a measure for the wear of the brake pads of the brake.

13. Brake according to one of the preceding claims, **characterized in that** it has a microcontroller (28) which is set up to transmit, as a measure for the wear of the brake disc, the way by which the spindle nut (12) moves the spindle (8) by rotation at arrangement of brake pads of known thickness on the brake shoes until the brake pads lie against a brake disc arranged between the brake pads.

## Revendications

1. Frein muni de deux bras de pince, aux extrémités desquels des mâchoires de frein sont respectivement prévues et entre lesquels un dispositif de génération de force est articulé à l'aide d'un premier support (1) et d'un second support (2) espacé de celui-ci, dans lequel une broche (8), mobile et parallèle au mouvement linéaire (3) dans un carter (4), qui est disposée en rotation entre les supports (1, 2), dans lequel le premier support (1) est disposé à une première extrémité (7) de la broche (8) et le second support (2) est disposé sur le carter (4), est pourvue d'un écrou de broche (12) agissant sur la broche (8), écrou disposé de manière rotative dans une raclette (13) et entraîné en rotation par un entraînement (15) fixé à la raclette (13), **caractérisé en ce que** la raclette (13) est bloquée en rotation, mais mobile parallèlement à l'axe de déplacement linéaire (3) dans le carter (4) et la raclette (13) est entraînée par un piston de frein (21) parallèlement à l'axe de déplacement linéaire (3).

2. Frein selon la revendication 1, **caractérisé en ce que** le premier support (1) et le second support (2) sont reliés de manière pivotante à des bras de pince opposés et que la broche (8) est articulée sur le premier support (1) avec blocage en rotation et guidée longitudinalement et en rotation contre le carter (4).

3. Frein selon l'une des revendications précédentes, **caractérisé en ce que** la broche (8) est guidée à sa première extrémité (7) dans un guide (9) au niveau de la première extrémité (5) du carter (4) et au niveau de sa deuxième extrémité (10) opposée à la première extrémité (7) dans un manchon de guidage fixe (11), au niveau de la seconde extrémité (6) du carter (4), opposé à la première extrémité (5), broche guidée de manière rotative et dans l'axe longitudinal.

4. Frein selon l'une des revendications 1 à 2, **caractérisé en ce que** la broche (8) est guidée à sa première extrémité (7) dans un guide (9) au niveau de la première extrémité (5) du carter (4) et/ou n'est pas guidée au niveau de sa seconde extrémité (10) opposée à la première extrémité (7).

5. Frein selon l'une des revendications précédentes, **caractérisé en ce que** le piston de frein (21) agit sur un coin (23) monté entre un premier rouleau presseur (24) monté sur le support (13) et un second rouleau presseur (25), qui est disposé sur le carter.

6. Frein selon l'une des revendications précédentes, **caractérisé en ce qu'**un roulement libre est disposée entre l'écrou de broche (12) et la raclette (13) et/ ou entre l'écrou de broche (12) et l'entraînement (15), qui tourne librement dans le sens de rotation de l'écrou de la broche (12), dans lequel la rotation déplace la broche (8) vers sa première extrémité (7) et se bloque dans le sens inverse de la rotation.

7. Frein selon l'une des revendications précédentes, **caractérisé en ce que** l'écrou de broche (12) est sollicité par un ressort de rappel de broche (26) prenant appui sur la première extrémité (5) du carter (4), à partir de la première extrémité (5) du carter.

8. Frein selon l'une des revendications précédentes, **caractérisé en ce que** dans le carter (4) est monté un capteur (18) est prévu dans le carter (4), capteur adapté au trajet et/ou à la position de la broche (8), de l'écrou de broche (12) et/ou de la raclette (13).

9. Frein selon l'une des revendications précédentes, **caractérisé par** un capteur de force (27) adapté pour recevoir la force agissant sur le premier support (1).

10. Frein selon la revendication 9, **caractérisé en ce que** le capteur de force (27) est disposé sur un rouleau presseur (23, 24) qui est sollicité par un coin du piston de frein (21).

11. Frein selon l'une des revendications précédentes, **caractérisé en ce qu'**il comporte un capteur de pression (30) pour la pression appliquée dans le cylindre de frein et que l'entraînement (15) est commandé de manière à faire tourner l'écrou de broche (12) uniquement lorsque le capteur de pression (30) ne reçoive aucune pression de freinage appliquée.

12. Frein selon l'une des revendications précédentes, **caractérisé en ce qu'**il comprend un microcontrôleur (28) adapté pour additionner les chemins respectifs par lesquels l'écrou de broche (12) déplace la broche (8) et comme les transmettre comme mesure de l'usure des garnitures de frein.

13. Frein selon l'une des revendications précédentes, **caractérisé en ce qu'**il comprend un microcontrôleur (28) conçu pour transmettre comme mesure de l'usure du disque de frein, la course suivie par l'écrou de broche (12) qui en tournant déplace la broche (8) dans la configuration des patins de frein selon une épaisseur connue au niveau des mâchoires de frein, jusqu'à ce que les plaquettes de frein viennent en butée contre un disque de frein disposé entre les plaquettes de frein.
